(19) Europäisches Patentamt / European Patent Office / Office européen des brevets

(11) **EP 3 899 111 B1**

(12) **FASCICULE DE BREVET EUROPEEN**

(45) Date de publication et mention de la délivrance du brevet:
**15.11.2023 Bulletin 2023/46**

(21) Numéro de dépôt: **19848963.5**

(22) Date de dépôt: **17.12.2019**

(51) Classification Internationale des Brevets (IPC):
**C25F 3/22** *(2006.01)* **B23H 3/08** *(2006.01)*
**B23H 9/10** *(2006.01)* **C25D 3/56** *(2006.01)*
**C25D 5/18** *(2006.01)*

(52) Classification Coopérative des Brevets (CPC):
**B23H 3/08; C25F 3/22;** B23H 9/10; C25D 3/562;
C25D 5/18

(86) Numéro de dépôt international:
**PCT/FR2019/053110**

(87) Numéro de publication internationale:
**WO 2020/128294 (25.06.2020 Gazette 2020/26)**

(54) **ELECTROLYTE POUR L'USINAGE ÉLECTROCHIMIQUE DE SUPERALLIAGES BASES NICKEL TYPE GAMMA-GAMMA SECOND**

ELEKTROLYT FÜR DIE ELEKTROCHEMISCHE BEARBEITUNG VON SUPERLEGIERUNGEN AUF DER BASIS VON GAMMA-GAMMA-DOPPELPRIME-NICKEL

ELECTROLYTE FOR THE ELECTROCHEMICAL MACHINING OF GAMMA-GAMMA DOUBLE PRIME-TYPE NICKEL-BASED SUPERALLOYS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2018 FR 1873039**

(43) Date de publication de la demande:
**27.10.2021 Bulletin 2021/43**

(60) Demande divisionnaire:
**23161110.4 / 4 215 647**

(73) Titulaires:
- **Safran Aircraft Engines**
  **75015 Paris (FR)**
- **Université de Lorraine**
  **54052 Nancy Cedex (FR)**
- **Centre national de la recherche scientifique**
  **75016 Paris (FR)**

(72) Inventeurs:
- **MSAKNI MALOUCHE, Mariem**
  **77550 MOISSY-CRAMAYEL (FR)**
- **LECOMTE, Janvier**
  **77550 MOISSY-CRAMAYEL (FR)**
- **RANCIC, Mickael**
  **77550 MOISSY-CRAMAYEL (FR)**
- **STEIN, Nicolas**
  **57000 METZ (FR)**
- **BOULANGER, Clotilde**
  **57420 COIN LES CUVRY (FR)**

(74) Mandataire: **Cabinet Beau de Loménie**
  **158, rue de l'Université**
  **75340 Paris Cedex 07 (FR)**

(56) Documents cités:
| | |
|---|---|
| EP-A1- 2 947 183 | CN-A- 107 214 208 |
| CN-B- 101 532 164 | RU-C1- 2 489 235 |
| SU-A1- 390 902 | SU-A1- 1 278 135 |
| US-A1- 2009 139 875 | US-A1- 2009 139 875 |
| US-A1- 2016 362 810 | |

- **SURESH H SUREKAR ET AL: "Optimization of Parameters in Electrochemical Machining of Ni-Base Superalloy", INTERNATIONAL JOURNAL OF RESEARCH IN AERONAUTICAL AND MECHANICAL ENGINEERING, vol. 4, no. 1, 1 janvier 2016 (2016-01-01) , pages 72-80, XP055629745, ISSN: 2321-3051**

**Description**

**Domaine Technique**

Cette invention concerne le domaine des électrolytes pour l'usinage électrochimique (ECM) des superalliages base nickel de type $\gamma$-$\gamma$" (gamma-gamma second).

**Technique antérieure**

L'ECM est un procédé d'usinage non conventionnel. Ce procédé vise principalement les matériaux conducteurs électriques. Le principe de l'ECM est basé sur la dissolution anodique d'une pièce (anode) a l'aide d'un outil appelé cathode en présence d'un électrolyte conducteur ionique. La distance inter-électrode (gap) est définie comme la distance entre la pièce à usiner et la cathode. Elle est de l'ordre de 0,1 à 1 mm.

L'usinage électrochimique de précision (PECM) repose sur le même principe d'oxydation anodique du métal. Néanmoins, il se distingue de l'ECM par l'imposition d'un courant pulsé et non continu. Le courant est synchronisé à une oscillation de la cathode. Cette oscillation est accompagnée d'un mouvement de translation rectiligne, mais également par un plus faible gap (10 à 200 $\mu$m). Le procédé devient ainsi sensible à la formation des bulles d'hydrogène qui se forment à la cathode et perturbent l'efficacité du procédé.

Dans les pratiques d'aujourd'hui, l'usinage des superalliages base nickel de type $\gamma$-$\gamma$" est réalisé dans une solution d'électrolyte à base de NaNO$_3$ à des concentrations comprises entre 8 % et 20 % en poids par rapport au poids total de la solution.

Lors de la réalisation de l'ECM, ainsi que ses dérivés (ECM de précision PECM, polissage électrochimique ECG) en milieu NaNO$_3$, la dissolution anodique des superalliages $\gamma$-$\gamma$" génère des produits de dissolution solubles mais également des produits insolubles qui forment une boue dont une grande partie reste collée sur les surfaces usinées électro-chimiquement. Cette dernière est principalement constituée d'oxydes et d'hydroxydes qui s'opposent à la réaction optimale de la dissolution. De plus certaines phases constituant ces superalliages tels que les phases $\gamma$", les carbures et les nitro-carbures, sont insolubles et lors de l'usinage et se déchaussent sous l'action du flux d'électrolyte ce qui forme une surface rugueuse. L'ensemble de ces conséquences entraîne une diminution du rendement ainsi que des opérations supplémentaires de reconditionnement des surfaces usinées (décapage chimique, polissage par abrasion).

Cette dissolution est également accompagnée par la formation de dihydrogène à la surface de la cathode ce qui entraîne une fluctuation et une perturbation du procédé. Ces bulles de gaz formées entraînent une perturbation du procédé en raison de la faible distance entre la cathode et la pièce à usiner (gap compris entre 10 $\mu$m et 200 $\mu$m pour l'usinage électrochimique de précision (PECM) ce qui diminue le rendement.

Un électrolyte pour l'usinage électrochimique de certains métaux (Fe, Cu, Ni, Al, Sn, Cr et Zn) ainsi que leurs alliages est connu. Cet électrolyte se base principalement sur l'ajout d'agents complexants pouvant être l'EDTA, HEDTA, NTA ou de l'acide citrique avec un mélange de sel inorganique à base de NaNO$_3$, NaCl, NaClO$_4$, Na$_2$SO$_4$, KNO$_3$, KCl, KClO$_4$, K$_2$SO$_4$, LiNO$_3$, LiCl, LiClO$_4$, et Li$_2$SO$_4$ pour un intervalle de concentration allant de 100 g/L à 500 g/L. L'électrolyte renferme aussi un agent réducteur tel que l'acide ascorbique. Toutefois les agents complexants ne permettent pas la complexation du Nb, l'élément majeur des inclusions $\gamma$", d'autant plus que la NTA a été utilisée dans une plage de pH de 2 à 7 qui ne permet pas une bonne action de complexation.

Il existe donc un besoin de trouver un nouvel électrolyte destiné à l'usinage électrochimique des superalliages base nickel de type $\gamma$-$\gamma$" et ne présentant pas les inconvénients de l'art antérieur.

EP 2 947 183 A1 ; US 2016/362810 A1 ; Surekar et al., International Journal of Research in Aeronautical and Mechanical Engineering (2016), 4(1), 72-80; et CN 107 214 208 A fournissent d'autres informations sur l'état de la technique.

**Exposé de l'invention**

Les inventeurs ont ainsi découvert de façon surprenante qu'un électrolyte à base de NaNO$_3$ et présentant une composition particulière était parfaitement adapté à l'usinage électrochimique des superalliages base nickel de type $\gamma$-$\gamma$" sans présenter les inconvénients de l'art antérieur et en particulier que cet électrolyte permet de diminuer la surtension de l'hydrogène produit à la surface de la cathode, d'augmenter le rendement de dissolution et produit un effet meilleur sur la diminution de la rugosité.

La présente invention concerne donc un électrolyte selon la revendication 1.

Les superalliages base nickel $\gamma$-$\gamma$" sont par exemple l'Inconel 718$^{®}$ commercialisé par la société alloy wire international. Il s'agit d'un alliage de nickel-fer-chrome durcissable par précipitation et présentant une grande résistance à la rupture par fluage à haute température d'environ 700 °C, ayant avantageusement la composition suivante, en % en poids :

Ni 50-55, Cr 17-21, Mo 2,8-3,3, Nb 4,75-5,5, Ti 0,65-1,15, Al 0,2-0,8, C ≤ 0,08, Mn ≤ 0,35, Si ≤0,35, P ≤ 0,015, S ≤ 0,015, Co ≤ 1,00, Ta ≤ 0,05, B ≤ 0,006, Cu ≤ 0,30, Pb ≤ 0,0005, Bi ≤ 0,00003, Se ≤ 0,003 et le solde Fe.

L'acide sulfosalicylique à un pH compris entre 3 et 10, avantageusement à un pH de 6, permet de complexer l'élément majeur des phases $Ni_3Nb$ qui est le niobium insoluble en milieu nitrate seul.

Le complexant est l'acide sulfosalicylique à un pH compris entre 3 et 10, plus avantageusement à un pH de 6.

Un surfactant anionique peut être présent dans l'électrolyte. Il permet de réduire la tension de surface et faciliter la réaction de dissolution. Il permet également de diminuer la surtension de l'hydrogène produit à la surface de la cathode et qui entraîne des perturbations lors du processus d'usinage et d'augmenter le rendement de dissolution. Dans un mode de réalisation avantageux, le surfactant anionique est choisi dans le groupe constitué par la saccharine, le dodécylsulfate de sodium, les sulfonates, les carboxylates, les sulfocinates les phosphates et leurs mélanges, avantageusement il est choisi dans le groupe constitué par la saccharine, le dodécylsulfate de sodium et leurs mélanges.

L'électrolyte selon l'invention permet d'assurer une dissolution anodique homogène de toutes les phases du superalliage base nickel γ-γ". Il permet également de garantir de bons états de surface avec une optimisation du rendement et de la vitesse de dissolution et une diminution des résidus formés.

L'électrolyte selon l'invention est préparé par des méthodes bien connus de l'homme du métier, par simple ajout et mélange des différents composants dans le solvant aqueux. Si le NaOH est nécessaire, il est ajouté à la fin jusqu'à obtention du pH visé.

La présente invention concerne en outre l'utilisation de l'électrolyte selon l'invention pour l'usinage électrochimique de superalliage base nickel γ-γ", en particulier l'usinage électrochimique de précision de superalliage base nickel γ-γ", ou le polissage électrochimique (ECG) de superalliage base nickel γ-γ". Elle concerne de plus un procédé d'usinage électrochimique de superalliage base nickel γ-γ" comprenant les étapes successives suivantes :

    a- fournir une pièce en superalliage base nickel γ-γ" en tant qu'anode ;
    b- fournir un outil en tant que cathode ;
    c- fournir un électrolyte selon la présente invention ;
    d- immerger l'anode et la cathode dans l'électrolyte avec une distance inter électrode comprise entre 0,1 et 1 mm ;
    e- appliquer un courant continu entre l'anode et la cathode de façon à obtenir la dissolution anodique de la pièce en superalliage base nickel γ-γ";
    f- récupération de la pièce usinée obtenue à l'étape e).

L'outil utilisable en tant que cathode dans l'étape b) du procédé d'usinage électrochimique selon l'invention est principalement en acier inoxydable, mais peut également être en alliages de titane, en alliages de platine, en alliages base cuivre ou du cupro de tungstène.

Le courant de l'étape e) peut avoir une tension pouvant aller de 4 à 30 V. Sa densité de courant est avantageusement de 12,8A/cm². L'application du courant continu dans le cadre du procédé d'usinage électrochimique selon l'invention permet de faire circuler l'électrolyte de façon continue entre la cathode et l'anode pendant l'étape e) avec un débit suffisant, en particulier obtenu à l'aide d'une pression comprise entre 3,5 et 4 bar (entre 350 000 et 400 000 Pa), afin d'évacuer les résidus de la dissolution anodique (boue et dihydrogène) et de garantir une vitesse de dissolution optimale. La vitesse de dissolution est la différence de masse avant et après usinage divisée par le temps d'usinage. Elle est avantageusement supérieure ou égale à 80mg/min.

Le rendement de dissolution optimal avantageusement obtenu par le procédé selon l'invention est supérieur ou égal à 60% en masse. Il est calculé de la façon suivante :

Nous avons considéré uniquement le nickel comme élément électroactif par soucis de simplification. La réaction anodique est alors :

$$Ni \rightarrow Ni^{2+} + 2e^-$$

La perte de masse théorique $\Delta W_{theo}$ des échantillons est établi à partir de la relation suivante :

$$\Delta Wtheo = \frac{M \times I \times t}{n \times F} \qquad (1)$$

M étant la masse molaire atomique du nickel, I le courant appliqué, t la durée de l'oxydation, n la valence des ions dissous (n=2) et F la constante de Faraday = 96 500 C/mol. L'hypothèse que le rendement faradique est de 100 % a été émise.

Le rendement est ensuite défini par :

$$\eta = \frac{\Delta Wexp}{\Delta Wtheo} \qquad (2)$$

Avec $\Delta W_{exp}$ la différence de masse avant et après le test et suite à un nettoyage surfacique final.

La présente invention concerne enfin un procédé d'usinage électrochimique de précision de superalliage base nickel $\gamma$-$\gamma''$ comprenant les étapes successives suivantes :

A- fournir une pièce en superalliage base nickel $\gamma$-$\gamma''$ en tant qu'anode ;

B- fournir un outil en tant que cathode ;

C- fournir un électrolyte selon l'invention ;

D- immerger l'anode et la cathode dans l'électrolyte ;

E- appliquer un courant pulsé entre l'anode et la cathode, en synchronisation avec une éventuelle oscillation de la cathode, et accompagnée d'un éventuel mouvement de translation rectiligne de la cathode vers l'anode permettant d'obtenir une distance inter électrode minimale de 10 à 200 $\mu$m, de façon à obtenir la dissolution anodique de la pièce en superalliage base nickel $\gamma$-$\gamma''$;

F- récupération de la pièce usinée obtenue à l'étape E).

L'outil utilisable en tant que cathode dans l'étape B) du procédé d'usinage électrochimique selon l'invention est principalement en acier inoxydable, mais peut également être en alliages de titane, en alliages de platine, en alliages base cuivre ou du cupro de tungstène.

Le courant de l'étape E) peut avoir une tension pouvant aller de 6 V à 18,7 V. L'amplitude des oscillations peut être comprise entre 0,2 et 0,8 mm, préférentiellement 0,4mm. La fréquence des oscillations peut être comprise entre 27 à 70 Hz et la durée des d'impulsion peut être comprise entre 2 et 10mS.

L'étape E) peut être mise en oeuvre avec ou sans oscillation de la cathode, avantageusement avec oscillation de la cathode. Si elle est mise en oeuvre sans oscillation, un déplacement continu de la cathode (uniquement avec les impulsions courant) peut être présent.

L'étape E) peut également être mise en oeuvre en mode dynamique (avec mouvement de translation rectiligne de la cathode vers l'anode) ou en mode statique (sans mouvement de translation rectiligne de la cathode vers l'anode), avec des impulsions courant et éventuellement avec des oscillations associées pour des opérations de polissage ou de reconditionnement de surface (enlèvement < 1mm). Ainsi l'étape E) du procédé selon l'invention peut être mise en oeuvre en mode statique, sans mouvement de translation rectiligne de la cathode vers l'anode ou l'étape E) du procédé selon l'invention peut être mise en oeuvre en mode dynamique avec mouvement de translation rectiligne de la cathode vers l'anode.

L'invention sera mieux comprise à la lumière de la description des exemples qui suivent.

**Exemples**

Trois électrolytes ont été testés dans un procédé d ECM en conditions un peu écartés du ECM (gap supérieur à 2 mm et faible densité de courant (178 mA/cm$^2$)) sur l'Inconel 718$^{®}$ :

- Solution A : 2,35 M $NaNO_3$ dans de l'eau
- Solution B : 2,35 M $NaNO_3$ + 0,1 M A. sulfosalicylique dans de l'eau pH 6
- Solution C : 2,35 M $NaNO_3$ + 0,1 M A. nitrilotriacétique dans de l'eau pH 10.

Les solutions A et C ne sont pas conformes à l'invention.

Des analyses MEB des états de surface obtenus après usinage ont permis de mettre en évidence une diminution considérable de produit de corrosion à la surface par utilisation des solutions B et C par rapport au milieu nitrate de sodium (solution A). Ces produits deviennent moins adhérents en présence du complexant et sont facilement éliminable par le flux d'électrolyte.

Les analyses chimiques (concentration en mg/L) des éléments dissous des électrolytes usés montrent qu'en présence de l'agent complexant à base d'acide sulfosalicylique (solution B) le niobium et 7 fois plus soluble qu'en milieu nitrate seul. De même les concentrations de Ti et du Mo ont également augmentés dans l'électrolyte ce qui montrent que leur passage en solution a été facilité en présence du complexant. Les résultats sont rassemblés dans le tableau 1 ci-après.

[Table 1]

|  | Ni | Fe | Cr | Mo | Nb | Ti |
|---|---|---|---|---|---|---|
| Solution A | 11,9 | 4,6 | 4,7 | 0,6 | 0,1 | 0,0 |
| Solution B | 11,5 | 5,1 | 5,0 | 1,0 | 0,7 | 0,1 |

**Revendications**

1.  Electrolyte pour l'usinage électrochimique de superalliage base nickel $\gamma$-$\gamma$" comprenant

    - du $NaNO_3$ en une teneur comprise entre 10 et 30% en poids par rapport au poids total de l'électrolyte ;
    - un complexant qui est l'acide sulfosalicylique à un pH compris entre 3 et 10, le complexant étant présent en une teneur comprise entre 1 et 5% en poids par rapport au poids total de l'électrolyte ;
    - éventuellement un surfactant anionique en une teneur comprise entre 1 et 5% en poids par rapport au poids total de l'électrolyte ;
    - éventuellement du NaOH afin d'obtenir le pH désiré ;
    - un solvant aqueux.

2.  Electrolyte selon la revendication 1, **caractérisé en ce qu'**il comprend un surfactant anionique, avantageusement choisi dans le groupe constitué par la saccharine, le dodécylsulfate de sodium, les sulfonates, les carboxylates, les sulfocinates les phosphates et leurs mélanges, plus avantageusement choisi dans le groupe constitué par la saccharine, le dodécylsulfate de sodium et leurs mélanges.

3.  Utilisation de l'électrolyte selon l'une quelconque des revendications 1 ou 2 pour l'usinage électrochimique de superalliage base nickel $\gamma$-$\gamma$", en particulier l'usinage électrochimique de précision de superalliage base nickel $\gamma$-$\gamma$"ou le polissage électrochimique de superalliage base nickel $\gamma$-$\gamma$".

4.  Procédé d'usinage électrochimique de superalliage base nickel Y-Y" comprenant les étapes successives suivantes :

    a- fournir une pièce en superalliage base nickel $\gamma$-$\gamma$" en tant qu'anode ;
    b- fournir un outil en tant que cathode ;
    c- fournir un électrolyte selon l'une quelconque des revendications 1 ou 2 ;
    d- immerger l'anode et la cathode dans l'électrolyte avec une distance inter électrode comprise entre 0,1 et 1 mm ;
    e- appliquer un courant continu entre l'anode et la cathode de façon à obtenir la dissolution anodique de la pièce en superalliage base nickel $\gamma$-$\gamma$";
    f- récupération de la pièce usinée obtenue à l'étape e).

5.  Procédé d'usinage électrochimique de précision de superalliage base nickel $\gamma$-$\gamma$" comprenant les étapes successives suivantes :

    A- fournir une pièce en superalliage base nickel $\gamma$-$\gamma$" en tant qu'anode ;
    B- fournir un outil en tant que cathode ;
    C- fournir un électrolyte selon l'une quelconque des revendications 1 ou 2;
    D- immerger l'anode et la cathode dans l'électrolyte ;
    E- appliquer un courant pulsé entre l'anode et la cathode, en synchronisation avec une éventuelle oscillation de la cathode, et accompagnée d'un éventuel mouvement de translation rectiligne de la cathode vers l'anode permettant d'obtenir une distance inter électrode minimale de 10 à 200 $\mu$m, de façon à obtenir la dissolution anodique de la pièce en superalliage base nickel $\gamma$-$\gamma$";
    F- récupération de la pièce usinée obtenue à l'étape E).

6.  Procédé selon la revendication 5, **caractérisé en ce que** l'étape E) est mise en oeuvre en mode statique, sans mouvement de translation rectiligne de la cathode vers l'anode.

7.  Procédé selon la revendication 5, **caractérisé en ce que** l'étape E) est mise en oeuvre en mode dynamique avec mouvement de translation rectiligne de la cathode vers l'anode.

8. Procédé selon l'une quelconque des revendications 5 à 7, **caractérisé en ce que** l'étape E) est mise en oeuvre avec oscillation de la cathode.

**Patentansprüche**

1. Elektrolyt für die elektrochemische Behandlung von Superlegierungen auf $\gamma$-$\gamma$"-Nickel-Basis, umfassend

   - NaNO$_3$ in einem Gehalt zwischen 10 und 30 Gew.-% in Bezug auf das Gesamtgewicht des Elektrolyts,
   - einen Komplexbildner, der Sulfosalicylsäure bei einem pH zwischen 3 und 10 ist, wobei der Komplexbildner in einem Gehalt zwischen 1 und 5 Gew.-% in Bezug auf das Gesamtgewicht des Elektrolyts vorhanden ist,
   - optional einen anionischen oberflächenaktiven Stoff in einem Gehalt zwischen 1 und 5 Gew.-% in Bezug auf das Gesamtgewicht des Elektrolyts,
   - optional NaOH, um den gewünschten pH zu erhalten,
   - ein wässriges Lösungsmittel.

2. Elektrolyt nach Anspruch 1, **dadurch gekennzeichnet, dass** er einen anionischen oberflächenaktiven Stoff umfasst, der vorteilhafterweise ausgewählt ist aus der Gruppe bestehend aus Saccharin, Natriumdodecylsulfat, den Sulfonaten, den Carboxylaten, den Sulfocinaten, den Phosphaten und deren Mischungen, und noch bevorzugter ausgewählt ist aus der Gruppe bestehend aus Saccharin, Natriumdodecylsulfat und deren Mischungen.

3. Verwendung des Elektrolyts nach einem der Ansprüche 1 oder 2 für die elektrochemische Behandlung von Superlegierungen auf $\gamma$-$\gamma$"-Nickel-Basis, insbesondere für die elektrochemische Präzisionsbehandlung von Superlegierungen auf $\gamma$-$\gamma$"-Nickel-Basis, oder das elektrochemische Polieren von Superlegierungen auf $\gamma$-$\gamma$"-Nickel-Basis.

4. Verfahren für die elektrochemische Behandlung von Superlegierungen auf $\gamma$-$\gamma$"-Nickel-Basis, umfassend der Reihe nach die folgenden Schritte:

   a- Bereitstellen eines Teils aus einer Superlegierung auf $\gamma$-$\gamma$"-Nickel-Basis als Anode,
   b- Bereitstellen eines Werkzeugs als Kathode,
   c- Bereitstellen eines Elektrolyts nach einem der Ansprüche 1 oder 2,
   d- Eintauchen der Anode und der Kathode in den Elektrolyt mit einem Zwischenelektroden-Abstand zwischen 0,1 und 1 mm,
   e- Anlegen eines Gleichstroms zwischen der Anode und der Kathode auf eine Weise, um die anodische Auflösung des Teils aus der Superlegierung auf $\gamma$-$\gamma$"-Nickel-Basis zu erzielen,
   f- Entnehmen des bearbeiteten Teils, das in Schritt e) erhalten wird.

5. Verfahren für die elektrochemische Präzisionsbehandlung von Superlegierungen auf $\gamma$-$\gamma$"-Nickel-Basis, umfassend der Reihe nach die folgenden Schritte:

   A- Bereitstellen eines Teils aus einer Superlegierung auf $\gamma$-$\gamma$"-Nickel-Basis als Anode,
   B- Bereitstellen eines Werkzeugs als Kathode,
   C- Bereitstellen eines Elektrolyts nach einem der Ansprüche 1 oder 2,
   D- Eintauchen der Anode und der Kathode in den Elektrolyt,
   E- Anlegen eines gepulsten Stroms zwischen der Anode und der Kathode, in Synchronisation mit einer optionalen Oszillation der Kathode, und begleitet von einer optionalen geraden Verschiebungsbewegung der Kathode zur Anode hin, was erlaubt, einen minimalen Zwischenelektroden-Abstand von 10 bis 200 $\mu$m zu erzielen, um eine anodische Auflösung des Teils aus der Superlegierung auf $\gamma$-$\gamma$"-Nickel-Basis zu erzielen,
   F- Entnehmen des bearbeiteten Teils, das in Schritt E) erhalten wird.

6. Verfahren nach Anspruch 5, **dadurch gekennzeichnet, dass** der Schritt E) auf statische Weise umgesetzt wird, ohne gerade Verschiebungsbewegung der Kathode zur Anode hin.

7. Verfahren nach Anspruch 5, **dadurch gekennzeichnet, dass** der Schritt E) auf dynamische Weise umgesetzt wird, mit gerader Verschiebungsbewegung der Kathode zur Anode hin.

8. Verfahren nach einem der Ansprüche 5 bis 7, **dadurch gekennzeichnet, dass** der Schritt E) mit Oszillation der Kathode umgesetzt wird.

**Claims**

1. An electrolyte for the electrochemical machining of a $\gamma$-$\gamma$" nickel-based superalloy, comprising

    - $NaNO_3$ in a content of between 10% and 30% by weight relative to the total weight of the electrolyte;
    - a complexing agent which is sulfosalicylic acid at a pH of between 3 and 10, the complexing agent being present in a content of between 1% and 5% by weight relative to the total weight of the electrolyte;
    - optionally, an anionic surfactant in a content of between 1% and 5% by weight relative to the total weight of the electrolyte;
    - optionally, NaOH in order to obtain the desired pH;
    - an aqueous solvent.

2. The electrolyte as claimed in claim 1, **characterized in that** it comprises an anionic surfactant, advantageously selected from the group consisting of saccharin, sodium dodecylsulfate, sulfonates, carboxylates, sulfocinates, phosphates, and mixtures thereof, more advantageously selected from the group consisting of saccharin, sodium dodecylsulfate, and mixtures thereof.

3. The use of the electrolyte as claimed in any one of claims 1 or 2 for the electrochemical machining of a $\gamma$-$\gamma$" nickel-based superalloy, in particular the precision electrochemical machining of a $\gamma$-$\gamma$" nickel-based superalloy or the electrochemical grinding of a $\gamma$-$\gamma$" nickel-based superalloy.

4. A process for the electrochemical machining of a Y-Y" nickel-based superalloy, comprising the following successive steps:

    a- providing a $\gamma$-$\gamma$" nickel-based superalloy workpiece as an anode;
    b- providing a tool as a cathode;
    c- providing an electrolyte as claimed in any one of claims 1 or 2;
    d- immersing the anode and the cathode in the electrolyte with an inter-electrode distance of between 0.1 and 1 mm;
    e- applying a continuous current between the anode and the cathode so as to achieve the anodic dissolution of the $\gamma$-$\gamma$" nickel-based superalloy workpiece;
    f- recovering the machined workpiece obtained in step e).

5. A process for the precision electrochemical machining of a $\gamma$-$\gamma$" nickel-based superalloy, comprising the following successive steps:

    A- providing a $\gamma$-$\gamma$" nickel-based superalloy workpiece as an anode;
    B- providing a tool as a cathode;
    C- providing an electrolyte as claimed in any one of claims 1 or 2;
    D- immersing the anode and the cathode in the electrolyte;
    E- applying a pulsed current between the anode and the cathode, synchronized with a possible oscillation of the cathode, and accompanied by a possible rectilinear translational movement of the cathode towards the anode making it possible to obtain a minimum inter-electrode distance of 10 to 200 $\mu$m, so as to achieve the anodic dissolution of the $\gamma$-$\gamma$" nickel-based superalloy workpiece;
    F- recovering the machined workpiece obtained in step E).

6. The process as claimed in claim 5, **characterized in that** step E) is implemented in static mode, without rectilinear translational movement of the cathode towards the anode.

7. The process as claimed in claim 5, **characterized in that** step E) is implemented in dynamic mode, with rectilinear translational movement of the cathode towards the anode.

8. The process as claimed in any one of claims 5 to 7, **characterized in that** step E) is implemented with oscillation of the cathode.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2947183 A1
- US 2016362810 A1
- CN 107214208 A

**Littérature non-brevet citée dans la description**

- **SUREKAR et al.** *International Journal of Research in Aeronautical and Mechanical Engineering,* 2016, vol. 4 (1), 72-80